Europäisches Patentamt

European Patent Office

Office européen des brevets

(11) Veröffentlichungsnummer: **0 305 700 B1**

(12) **EUROPÄISCHE PATENTSCHRIFT**

(45) Veröffentlichungstag der Patentschrift: **16.10.91**

(21) Anmeldenummer: **88111276.7**

(22) Anmeldetag: **14.07.88**

(51) Int. Cl.⁵: **F04D 17/12**, F04D 25/06, F04D 29/58

(54) **Kompressoreinheit.**

(30) Priorität: **03.09.87 DE 3729486**

(43) Veröffentlichungstag der Anmeldung:
**08.03.89 Patentblatt 89/10**

(45) Bekanntmachung des Hinweises auf die
Patenterteilung:
**16.10.91 Patentblatt 91/42**

(84) Benannte Vertragsstaaten:
**CH DE FR GB IT LI NL**

(56) Entgegenhaltungen:
**DE-A- 2 541 715**
**FR-A- 1 181 680**
**FR-A- 2 528 127**
**NL-C- 28 781**

(73) Patentinhaber: **MAN Gutehoffnungshütte Aktiengesellschaft**
**Bahnhofstrasse 66 Postfach 11 02 40**
**W-4200 Oberhausen 11(DE)**

(72) Erfinder: **Turanskyj, Lubomjr, Dr.-Ing.**
**Wilhelmplatz 5**
**W-4200 Oberhausen 11(DE)**

## Beschreibung

Die Erfindung bezieht sich auf eine Kompressoreinheit mit Antrieb durch einen Hochfrequenzmotor mit Lagern, der mit Kompressorstufen verbunden und mit diesen in einem gemeinsamen nach außen gasdichten Gehäuse angeordnet ist, wobei das gemeinsame Gehäuse zur Kühlung des Hochfrequenzmotors, der Lager sowie der Kompressorstufen von einer Flüssigkeit umgeben ist.

Bisher werden im Offshore-Bereich zur Förderung von Erdgas Kompressoren auf Plattformen verwendet. Bei großen Wassertiefen und im Eismeer beispielsweise wird die sichere Befestigung der Bohrinseln schwierig. Auch wird der mögliche günstige Effekt der dort im Wasser herrschenden niedrigen Temperaturen für den Verdichtungsprozeß nicht ausgenutzt.

Es ist ein Verdichter, vorzugsweise zum Fördern eines eine radioaktive Substanz enthaltenden Gases mit einem Gehäuse bekannt, das gasdicht gegenüber der Außenatmosphäre mit dem Gehäuse eines Elektromotors verbunden ist (DE-OS 1 811 232). Die beiden Elektromotoren sind Kurzschlußläufermotoren, deren Käfigläufer fliegend auf den Enden der Kompressorwelle angeordnet sind. Die Motorgehäuse sind ihrerseits gasdicht, genau wie das Kompressorgehäuse. Die Kompressorlager nehmen die durch die magnetischen Zugkräfte sowie durch das Läufergewicht verursachten Kräfte zusätzlich auf. Eine Abdichtung zwischen dem Kompressorgehäuse und den Motorengehäusen ist nicht notwendig. Da durch die Verbindung zwischen Kompressor und Motor Gas in den Motorenraum eintritt, werden Motorgehäuse, Befestigungsflansch und Gegenschild für die auftretenden Überdrücke konstruiert.

Aufgabe der vorliegenden Erfindung ist es, eine Kompressoreinheit der gattungsgemäßen Art derart weiterzubilden, daß sie zur Erdgasförderung in großen Wassertiefen verwendet werden kann.

Erfindungsgemäß wird hierzu eine Kompressoreinheit nach dem Oberbegriff von Anspruch 1 konzipiert, bei der die Lager Magnetlager sind, das Gehäuse im Bereich der Kompressorstufen mit geringem Abstand zu Strömungskanälen der Kompressorstufen ausgeführt ist, gasseitige Rohrleitungen zwischen den Kompressorstufengruppen als Oberflächenkühler ausgebildet und um das Gehäuse herum angeordnet sind und die saugseitige Gasrohrleitung als Oberflächenkühler ausgebildet ist.

Die Kühlung des Motors, der Lager und des Gases im Kompressor erfolgt in optimaler Weise durch die das gemeinsame Gehäuse umgebende Flüssigkeit. Hierbei ist es zweckmäßig, das Gehäuse mit Kühlrippen zu versehen.

Die Wellenlage kann horizontal, vertikal oder in einer gewünschten Zwischenlage sein. Die Wellenlage wird zweckmäßigerweise durch eine automatische Nivelliereinrichtung konstant gehalten, die beispielsweise von der das Gehäuse umgebenden Flüssigkeit und dem Gasdruck in Ballastkammern gesteuert wird.

Eine Energieeinsparung wird dadurch erzielt, daß die Verdichtung des Gases in den Kompressorstufen unter der Einwirkung der das Gehäuse umgebenden kalten Flüssigkeit bei einem niedrigeren Polytropenexponenten als bei adiabater Verdichtung stattfindet. Dies wird insbesondere begünstigt, wenn das Gehäuse im Bereich der Kompressorstufen so eingeschnürt wird, daß die äußere Flüssigkeit die strömungsführenden Bauteile, wie Rückführkanäle und Diffusoren, umgibt.

Eine weitere Energieeinsparung wird dadurch erzielt, daß die Verbindungsleitungen zwischen Kompressorstufengruppen als Oberflächenkühler ausgebildet werden, die innen vom Gas durchströmt und außen von der das Gehäuse umgebenden Flüssigkeit umspült werden. Diese Oberflächenkühler können z.B. als Ringkühler um das Gehäuse gelegt werden.

Ein Teil des so rückgekühlten Gases kann zur Rotorkühlung des Hochfrequenzmotors sowie zur Kühlung der Magnetlager Verwendung finden.

Eine Energieeinsparung ist ferner auch dann möglich, wenn warmes angesaugtes Gas bereits vor Eintritt in den Saugstutzen der ersten Kompressorstufe eine als Oberflächenkühler ausgebildete Ansaugleitung durchströmt.

Eine optimale Anströmung der Kompressorstufe ergibt sich dann, wenn die Ansaugung axial erfolgt.

Eine kompakte Bauweise mit wenig Lagern wird erzielt, wenn die Kompressorstufen- bzw. Stufengruppen auf dem bzw. den Wellenzapfen des Hochfrequenzmotors angeordnet werden.

Zur Erzielung einer geringstmöglichen axialen Lagerbelastung ist es zweckmäßig, die Kompressorstufen bzw. die Kompressorstufengruppen einander rückseitig zugewandt anzuordnen, sofern nicht die Kühleranordnung dagegen spricht.

Der Hochfrequenzmotor kann zweifach oder mehrfach gelagert sein, insbesondere bei Anordnung der Erregermaschine auf der gleichen Welle.

Bei großen Stufenzahlen kann es zweckmäßig sein, den Hochfrequenzmotor und den Kompressor separat zu lagern und die Wellen miteinander zu verbinden, gegebenenfalls über ein Getriebe.

Zur Vermeidung einer axialen Teilfuge des Gehäuses ist es zweckmäßig, die Einbauten der Kompressoreinheit rotationssymmetrisch zu bauen, um einen axialen Zusammenbau zu ermöglichen.

Erforderliche Wellendichtungen innerhalb des Gehäuses der Kompressoreinheit werden in üblicher Weise als Labyrinthdichtungen oder Gasdichtungen nach dem Gaslagerprinzip gebaut oder als berührungsfreie magnetische Wellendichtungen.

So entsteht nach der Erfindung eine modular aufgebaute, den Druckbedingungen entsprechende, leicht abzudichtende Kompressoreinheit, die ohne Ölversorgung lediglich durch elektrische Zuführkabel gespeist wird.

Anhand der Zeichnung werden nachstehend zwei Ausführungsbeispiele der erfindungsgemäßen Kompressoreinheit erläutert.

Es zeigen:

Figur 1    eine Kompressoreinheit mit auf den Wellenenden des Hochfrequenzmotors angeordneten Kompressorstufen im Längsschnitt,

Figur 1a    einen Längsschnitt wie Figur 1, jedoch mit den Versorgungsleitungen und

Figur 2    eine Kompressoreinheit mit größerer Kompressorstufenzahl, bei der die Kompressorstufen separat gelagert sind, im Längsschnitt.

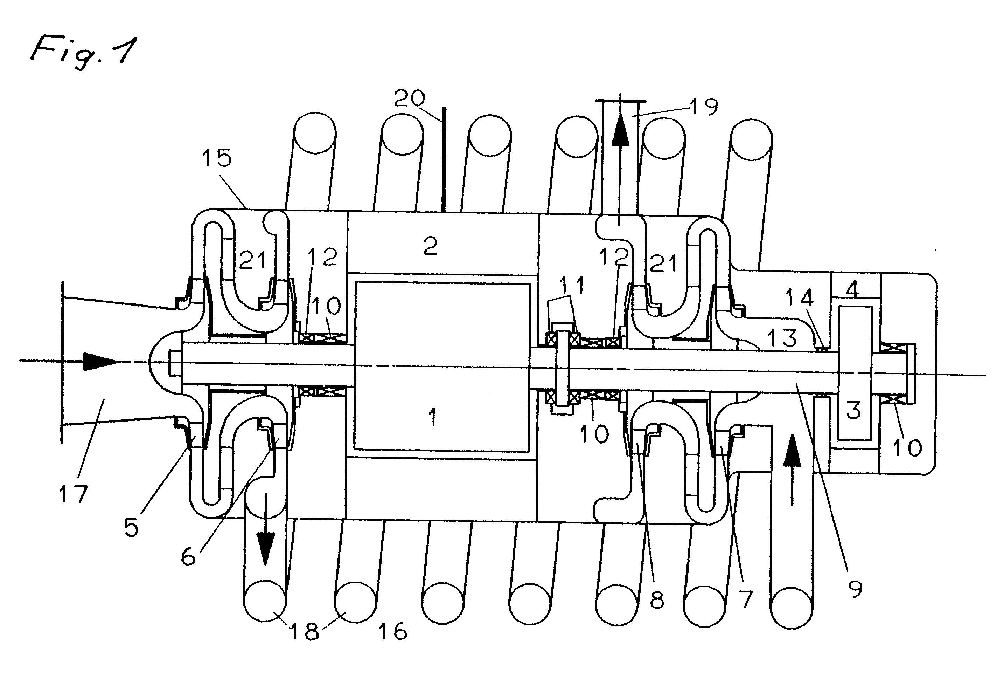

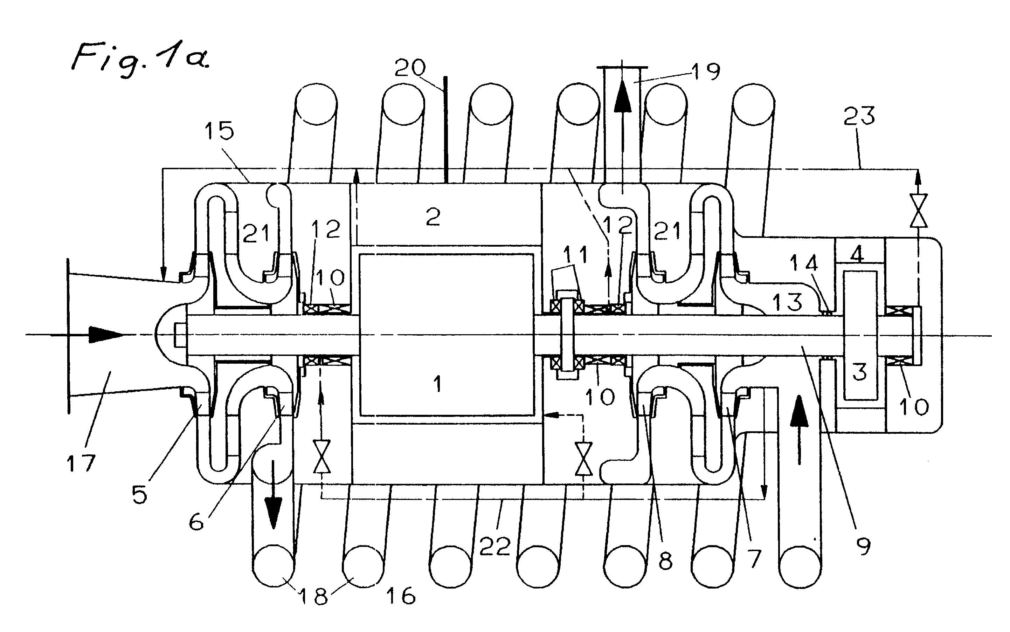

Figur 1 zeigt einen Hochfrequenzmotor, bestehend aus einem Rotor (1) und einem Stator (2) sowie eine Erregermaschine mit einem Rotor (3) und einem Stator (4), die mit Radialkompressorstufen (5, 6, 7, 8) auf einer gemeinsamen Welle (9) angeordnet sind.

Die Welle (9) ist in drei radialen Magnetlagern (10) und den axialen Magnetlagern (11) gelagert. Die Radialkompressorstufen (5, 6 bzw. 7, 8) sind gegen die radialen Magnetlager (10) am Hochfrequenzmotor mit den Sperrgasdichtungen (12) nach dem Gaslagerprinzip abgedichtet. Zwischen dem Saugstutzen (13) der dritten Radialkompressorstufe (7) und der Erregermaschine (3, 4) ist die Wellendichtung (14) als Labyrinthdichtung ausgebildet. Hochfrequenzmotor, Erregermaschine und die Radialkompressorstufen sind in einem gemeinsamen Gehäuse (15) gasdicht nach außen gegenüber der umgebenden Flüssigkeit (16) untergebracht.

Das zu fördernde Gas tritt über den Saugstutzen (17) der ersten Radialkompressorstufe (5) in den Kompressor ein. Vom Laufrad der ersten Stufe strömt das Gas über einen Rückführkanal in das Laufrad der zweiten Stufe (6) und von dort über den Diffusor in den als Ringkühler ausgebildeten Oberflächenkühler (18), der das Gehäuse (15) konzentrisch als Rohrschlange umgibt.

Im Ringkühler (Oberflächenkühler 18) wird das Gas von der umgebenden Flüssigkeit (16) unmittelbar gekühlt. Das gekühlte Gas tritt über den Saugstutzen (13) in die dritte und folgende Radialkompressorstufe (7, 8) ein.

Aus dem Diffusor der letzten Kompressorstufe (8) tritt das Gas in die Druckleitung (19) ein, von der es zum (nicht dargestellten) Verbraucher abgeführt wird.

Die Stromversorgung des Hochfrequenzmotors und die Steuerung der Kompressoreinheit erfolgen über Kabel (20).

Die Kammern (21) zwischen den Radialkompressorstufen (5, 6 bzw. 7, 8) können gegebenenfalls zur Kühlung mit der umgebenden Flüssigkeit verwendet werden.

Die konstruktive Ausbildung der Kompressoreinheit, insbesondere bezüglich der Montage der Einbauten des in Axialrichtung ungeteilten Gehäuses, ist nicht dargestellt.

Gemäß Figur 1a wird zur Kühlung des Rotors (1) des Hochfrequenzmotors, des Rotors (3) der Erregermaschine sowie der Magnetlager (10, 11) nach dem Ringkühler (Oberflächenkühler 18) über Zuführkanäle (22) ein Teil des Gasstromes entnommen und über Abführkanäle (23) dem Saugstutzen (17) zugeführt.

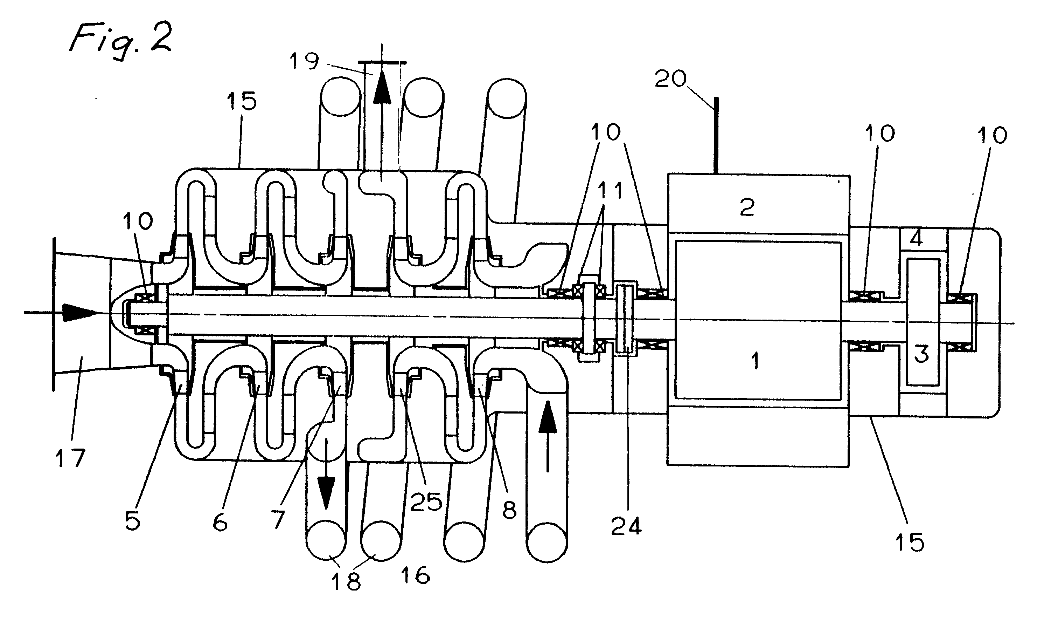

Figur 2 zeigt den Hochfrequenzmotor (1, 2) mit der Erregermaschine (3, 4) separat in drei radialen Magnetlagern (10) gelagert.

Der Hochfrequenzmotor treibt über eine Kupplung (24) einen fünfstufigen Radialkompressor an, der im Niederdruckteil aus den Stufen (5, 6, 7) und im Hochdruckteil aus den Stufen (8, 25) besteht. Der Radialkompressor ist in zwei radialen Magnetlagern (10) und einem axialen Magnetlager (11) gelagert.

Die gesamte Kompressoreinheit mit Antrieb befindet sich in einem gemeinsamen gasdichten Gehäuse (15). Der Oberflächenkühler (18) befindet sich wiederum wie bei dem Ausführungsbeispiel gemäß Figur 1 außerhalb des Gehäuses (15) in der umgebenden Flüssigkeit (16).

Bezugsziffernliste:

| | |
|---|---|
| 1 | Rotor des Hochfrequenzmotors |
| 2 | Stator des Hochfrequenzmotors |
| 3 | Rotor der Erregermaschine |
| 4 | Stator der Erregermaschine |
| 5 | 1. Radialkompressorstufe |
| 6 | 2. Radialkompressorstufe |
| 7 | 3. Radialkompressorstufe |
| 8 | 4. Radialkompresorstufe |
| 9 | Welle |
| 10 | radiale Magnetlager |
| 11 | axiale Magnetlager |
| 12 | Sperrgasdichtungen nach dem Gaslagerprinzip |
| 13 | Saugstutzen der 3. Radialkompressorstufe (7) |
| 14 | Wellendichtung als Labyrinthdichtung |
| 15 | Gehäuse |
| 16 | umgebende Flüssigkeit |
| 17 | Saugstutzen der 1. Radialkompressorstufe (5) |
| 18 | Oberflächenkühler |

19  Druckleitung
20  Kabel
21  Kammern
22  Zuführkanäle
23  Abführkanäle
24  Kupplung
25  5. Radialkompressorstufe

**Patentansprüche**

1.  Kompressoreinheit mit Antrieb durch einen Hochfrequenzmotor mit Lagern, der mit Kompressorstufen verbunden und mit diesen in einem gemeinsamen nach außen gasdichten Gehäuse angeordnet ist, wobei das gemeinsame Gehäuse zur Kühlung des Hochfrequenzmotors, der Lager sowie der Kompressorstufen von einer Flüssigkeit umgeben ist,
    dadurch gekennzeichnet,
    daß die Lager Magnetlager (10) sind, das Gehäuse (15) im Bereich der Kompressorstufen (5 - 8, 25) mit geringem Abstand zu Strömungskanälen der Kompressorstufen ausgeführt ist, gasseitige Rohrleitungen zwischen den Kompressorstufengruppen als Oberflächenkühler (18) ausgebildet und um das Gehäuse (15) herum angeordnet sind und die saugseitige Gasrohrleitung als Oberflächenkühler ausgebildet ist.

2.  Kompressoreinheit nach Anspruch 1,
    dadurch gekennzeichnet,
    daß das Gehäuse (15) über äußere Kühlrippen verfügt.

3.  Kompressoreinheit nach den Ansprüchen I bis 2,
    dadurch gekennzeichnet,
    daß das gasdichte Gehäuse (15) in der es umgebenden Flüssigkeit (16) durch eine Nivellierautomatik (auf der Basis Flüssigkeit und Fördergas) in der gewünschten Lage der Wellenachsen, welche horizontal, vertikal oder dazwischenliegend sein kann, gehalten wird.

4.  Kompressoreinheit nach den Ansprüchen 1 bis 3,
    dadurch gekennzeichnet,
    daß das Gehäuse (15) im Bereich der Kompressorstufen so eingeschnürt ist, daß die das Gehäuse (15) umgebende Flüssigkeit (16) auch in radialer Richtung in Kammern zwischen die strömungsführenden Bauteile der Kompressorstufen (5 - 8, 25) gelangt.

5.  Kompressoreinheit nach den Ansprüchen 1 bis 4,
    dadurch gekennzeichnet,

daß die die Kompressorstufengruppen verbindenden Rohrleitungen als Ringkühler (Oberflächenkühler 18) mit vom Gas durchströmten Rohren ausgebildet sind, wobei der Ringkühler das Gehäuse (15) konzentrisch als Rohrschlange umgibt.

6.  Kompressoreinheit nach einem oder mehreren der vorhergehenden Ansprüche,
    dadurch gekennzeichnet,
    daß ein Teil des im Oberflächenkühler (18) rückgekühlten verdichteten Gases über Kanäle (22) dem Rotor (1) des Hochfrequenzmotors und einer Erregermaschine (3) sowie den Magnetlagern (10, 11) zur Kühlung zugeführt wird.

7.  Kompressoreinheit nach einem oder mehreren der vorhergehenden Ansprüche,
    dadurch gekennzeichnet,
    daß zumindest die erste Kompressorstufe (5) eine axiale Ansaugung (17) hat.

8.  Kompressoreinheit nach einem oder mehreren der vorhergehenden Ansprüche.
    dadurch gekennzeichnet,
    daß die Kompressorstufen (5 - 8) auf der Welle (9) des Hochfrequenzmotors (1, 2) ein- oder beidseitig des Rotors (1) angeordnet sind.

9.  Kompressoreinheit nach einem oder mehreren der vorhergehenden Ansprüche,
    dadurch gekennzeichnet,
    daß die Kompressorstufen oder -stufengruppen einander rückseitig zugewandt angeordnet sind.

10. Kompressoreinheit nach einem oder mehreren der vorhergehenden Ansprüche,
    dadurch gekennzeichnet,
    daß der Hochfrequenzmotor (1, 2) oder der Hochfrequenzmotor mit der Erregermaschine (3, 4) mit zwei oder mehr Magnetlagern (10) versehen ist.

11. Kompressoreinheit nach einem oder mehreren der vorhergehenden Ansprüche,
    dadurch gekennzeichnet,
    daß der Hochfrequenzmotor (1, 2) oder der Hochfrequenzmotor mit der Erregermaschine (3, 4) und der Kompressor (5 - 8, 25) separat in Magnetlagern (10) gelagerte Wellen haben.

12. Kompressoreinheit nach einem oder mehreren der vorhergehenden Ansprüche,
    dadurch gekennzeichnet,
    daß die gesamte Kompressoreinheit keine axiale Teilfuge hat, sondern rotationssymmetrisch gebaut ist.

13. Kompressoreinheit nach einem oder mehreren der vorhergehenden Ansprüche, dadurch gekennzeichnet, daß die Wellendichtungen der Kompressoreinheit in bekannter Weise als Labyrinthdichtungen (14), Gasdichtungen nach dem Gaslagerprinzip (12) oder als berührungsfreie Magnetdichtungen ausgebildet sind.

**Claims**

1. Compressor unit with drive by a high frequency motor with bearings, which are connected to compressor stages and arranged therewith in a common housing sealed to the outside, the common housing being surrounded by a fluid for cooling the high frequency motor, the bearings and the compressor stages, characterised in that the bearings are magnetic bearings (10), the housing (15) in the region of the compressor stages (5-8, 25) is arranged at close spacing to the flow channels of the compressor stages, gas-side conduits between the compressor stage groups are constructed as surface-area coolers (18) and arranged around the housing (15), and the suction-side gas conduit is arranged as a surface-area cooler.

2. Compressor unit according to claim 1, characterised in that the housing (15) is provided with external cooling ribs.

3. Compressor unit according to claim 1 or 2, characterised in that the gas tight housing (15) is held in the surrounding fluid (16) by an automatic levelling device (based on fluid and feed gas), in the desired position of the shaft axis, which may be horizontal, vertical or in between.

4. Compressor unit according to claims 1 to 3, characterised in that the housing (15) is so constricted in the region of the compressor stages, that the fluid (16) surrounding the housing (15) also passes in the radial direction into chambers between the flow guiding components of the compressor stages (5-8, 25).

5. Compressor unit according to claims 1 to 4, characterised in that the conduits connecting the compressor stage groups are constructed as a ring cooler (surface air coolers 18) with conduits through which the gas flows, the ring cooler concentrically surrounding the housing (15) as a tubular coil.

6. Compressor unit according to one or more of the preceding claims, characterised in that part of the compressed gases cooled in the surface area cooler (18) is fed through channels (22) of the rotor (1) of the high frequency motor and an exciting machine (3) and the magnet bearings (10,11) for cooling.

7. Compressor unit according to one or more of the preceding claims, characterised in that at least the first compressor stage (5) has an axial intake (17).

8. Compressor unit according to one or more of the preceding claims, characterised in that the compressor stages (5-8) are arranged on the shaft (9) of the high frequency motor (1,2) on one or both sides of the rotor (1).

9. Compressor unit according to one or more of the preceding claims, characterised in that the compressor stages or stage groups are arranged back to back.

10. Compressor unit according to one or more of the preceding claims, characterised in that the high frequency motor (1,2) or the high frequency motor with the exciting machine (3,4) is provided with two or more magnetic bearings (10).

11. Compressor unit according to one or more of the preceding claims, characterised in that the high frequency motor (1,2) or the high frequency motor with the exciting machine (3,4) and the compressor (5-8,25) have shafts separately mounted in magnetic bearings (10).

12. Compressor unit according to one or more of the preceding claims, characterised in that the entire compressor unit has no axial partial joints but is of rotationally symmetrical construction.

13. Compressor unit according to one or more of the preceding claims, characterised in that the shaft seals of the compressor unit are constructed is known manner as labyrinth seals (14), gas seals of the gas bearing type or as contactless magnetic seals.

**Revendications**

1. Unité de compresseur avec entraînement par un moteur haute fréquence avec des paliers, qui est relié aux étages du compresseur et qui est disposé avec ceux-ci dans un carter commun étanche aux gaz vers l'extérieur, le carter commun étant entouré par un liquide pour refroidir le moteur haute fréquence, les paliers, ainsi que les étages de compresseur, unité de compresseur caractérisée en ce que les paliers sont des paliers magnétiques (10), le carter (15) est, dans la zone des étages du compresseur (5 à 8, 25), à une faible distance des canaux d'écoulement des étages du compresseur, les canalisations tubulaires côté sortie des gaz entre les groupes d'étages du compresseur sont réalisées sous la forme de refroidisseurs de surface (18) et sont disposées autour du carter (15), tandis que la canalisation tubulaire côté aspiration est réalisée sous la forme de refroidisseur de surface.

2. Unité de compresseur selon la revendication 1, caractérisée en ce que le carter (15) est muni de nervures de refroidissement externes.

3. Unité de compresseur selon les revendications 1 et 2, caractérisée en ce que le carter étanche aux gaz (15) est maintenu, dans le liquide environnant (16) par un dispositif automatique de maintien du niveau (sur la base du liquide et du gaz refoulé) dans la position souhaitée pour les axes des arbres, laquelle peut être horizontale, verticale ou intermédiaire.

4. Unité de compresseur selon les revendications 1 à 3, caractérisée en ce que le carter (15) dans la zone des étages du compresseur, est resserré de telle façon que le liquide (16) environnant le carter (15) parvienne également en direction radiale dans des chambres entre les parties constitutives contrôlant l'écoulement des étages du compresseur (5 à 8, 25).

5. Unité de compresseur selon les revendications 1 à 4, caractérisée en ce que les canalisations tubulaires reliant les groupes d'étages du compresseur sont réalisées sous la forme de refroidisseurs annulaires (refroidisseurs de surface 18) avec des tubes parcourus par le gaz, ce refroidisseur annulaire entourant concentriquement, sous la forme d'un serpentin tubulaire le carter (15).

6. Unité de compresseur selon une ou plusieurs des revendications précédentes, caractérisée en ce qu'une partie du gaz comprimé et refroidi dans le refroidisseur de surface (18) est envoyé par des canaux (22) au rotor (1) du moteur hauteur fréquence et d'une machine excitatrice (3), ainsi qu'aux paliers magnétiques (10) pour les refroidir.

7. Unité de compresseur selon une ou plusieurs des revendications précédentes caractérisée en ce qu'au moins le premier étage (5) du compresseur a une aspiration (17) axiale.

8. Unité de compresseur selon une ou plusieurs des revendications précédentes caractérisée en ce que les étages du compresseur (5 à 8) sont montés sur l'arbre (9) du moteur haute fréquence (1,2) de l'un ou des deux côtés du rotor (1).

9. Unité de compresseur selon une ou plusieurs des revendications précédentes, caractérisée en ce que les étages ou les groupes d'étages du compresseur sont adossés les uns aux autres.

10. Unité de compresseur selon une ou plusieurs revendications précédentes caractérisée en ce que le moteur haute fréquence (1,2) ou le moteur haute fréquence (1,2) avec la machine excitatrice (3,4) est pourvu de deux ou plusieurs paliers magnétiques (10).

11. Unité de compresseur selon une ou plusieurs des revendications précédentes, caractérisée en ce que le moteur haute fréquence (1,2) ou le moteur haute fréquence (1,2) avec la machine excitatrice (3,4) et le compresseur ont des arbres montés sur des paliers magnétiques (10) distincts.

12. Unité de compresseur selon une ou plusieurs des revendications précédentes caractérisée en ce que l'unité de compresseur tout entière n'a pas de joint d'assemblage axial, mais est construite avec une symétrie de révolution.

13. Unité de compresseur selon une ou plusieurs des revendications précédentes, caractérisée en ce que les joints d'étanchéité de l'arbre de l'unité de compresseur sont réalisés de la manière connue sous forme de joints d'étanchéité à labyrinthe (14), de joints d'étanchéité à gaz (12) ou de joints d'étanchéité magnétiques exempts de tout contact.

Fig.1

Fig. 1a

EP 0 305 700 B1

Fig.2